# EUROPÄISCHE PATENTSCHRIFT

(11) **EP 0 416 611 B1**
(45) Veröffentlichungstag und Bekanntmachung des Hinweises auf die Patenterteilung: **02.03.1994**
(21) Anmeldenummer: 90117176.9
(22) Anmeldetag: 06.09.1990
(51) Int. Cl.: B23B 29/20, B23B 29/32, B23B 29/24

(54) **Anordnung eines auswechselbaren Werkzeughalters an einem Revolverkopf einer Drehmaschine**
Installation of an exchangeable tool holder on the turret of a lathe
Installation d'un porte-outil interchangeable sur la tourelle revolver d'un tour

(30) Priorität: 07.09.1989 DE 3929801
(43) Veröffentlichungstag der Anmeldung: 13.03.1991
(73) Patentinhaber: Traub AG, 73262 Reichenbach (DE)
(72) Erfinder: Sonnek, Werner, D-7061 Lichtenwald (DE); Kersten, Günter, D-7311 Hochdorf (DE)
(74) Vertreter: Goetz, Rupert, Dipl.-Ing.

(56) Entgegenhaltungen:
- EP-A- 0 101 917
- EP-A- 0 114 443
- DE-A- 1 813 142
- DE-C- 3 202 042
- DE-U- 9 003 730

## Beschreibung

Die Erfindung betrifft einen Revolverkopf mit auswechselbaren Werkzeughaltern an einer mit Haupt- und Gegenspindel ausgestatteten Drehmaschine, mit
- Einstecklöchern, die von je einer ebenen Aufspannfläche des Revolverkopfes ausgehen, und
- einem im Revolverkopf geführten, verzahnten Bolzen für jedes Einsteckloch, wobei
- jeder Werkzeughalter ein Gehäuse aufweist, das eine Anlagefläche zum Anlegen an eine der Aufspannflächen des Revolverkopfes hat, und
- jeder Werkzeughalter ferner einen Schaft aufweist, der von der Anlagefläche ausgeht, zum Einstecken in das Einsteckloch des Revolverkopfes ausgebildet und zahnstangenartig verzahnt ist, so daß er sich mittels des entsprechend verzahnten, im Revolverkopf geführten Bolzens axial festspannen läßt.

Solche Anordnungen sind aus dem Normblatt DIN 69 880 vom September 1983 sowie aus der DE 3202042 C2 bekannt. Dabei war bisher vorgesehen, daß zwar jeder beliebige Werzeughalter mit seinem Schaft in jedem beliebigen Einsteckloch des Revolverkopfes festgespannt werden konnte, dies jedoch nur in einer bestimmten Orientierung des Schaftes in bezug auf das ihn aufnehmende Einsteckloch. Beispielsweise sind gemäß der DE 3202042 C2 sämtliche Einstecklöcher im Revolverkopf parallel zu dessen Drehachse angeordnet und dazu ausgebildet, den Schaft eines beliebigen Werkzeughalters derart aufzunehmen, daß die am Schaft ausgebildete Verzahnung von der Drechachse des Revolverkopfes abgewandt ist. Für unterschiedliche Bearbeitungsaufgaben werden Werzeughalter verwendet, deren Gehäuse am zugehörigen Schaft in unterschiedlicher Orientierung, beispielsweise parallel oder radial zur Drehachse des Revolvers, befestigt ist.

Aus der DE 3721158 A1 ist ein Werkzeugwechselsystem bekannt, das einen Werkzeughalter und einen auswechselbaren Werkzeugkopf aufweist. Der Werkzeughalter hat einen zylindrischen zentralen Zapfen, auf den der mit einer entsprechenden Bohrung versehene Werkzeugkopf in verschiedenen Winkellagen aufsteckbar ist. Zum Fixieren des Werkzeugkopfes in der gewählten Winkellage sind am Werkzeughalter oder am Werkzeugkopf parallel zum zentralen Zapfen Paßbohrungen angeordnet, in die je ein am Werkzeugkopf bzw. am Werkzeughalter befestigter Stift eingreift. Zum Festspannen des Werkzeugkopfes ist bei solchen Werkzeugwechselsystemen üblicherweise eine axiale Spannschraube vorgesehen.

Der Erfindung liegt die Aufgabe zugrunde, eine Anordnung der oben beschriebenen Gattung derart weiterzubilden, daß die Werkzeughalter vielseitiger einsetzbar sind.

Die Aufgabe ist erfindungsgemäß dadurch gelöst, daß
- die Aufspannflächen zwischen einer vorderen und einer hinteren Stirnfläche des Revolverkopfes an dessen Umfang angeordnet sind,
- der Schaft jedes der Werkzeughalter zwei einander diametral gegenüberliegende gleiche Verzahnungen aufweist, mit denen die Werkzeughalter in den Einstecklöchern in zwei um 180° gegeneinander verdrehten Stellungen festspannbar sind, nämlich
- wahlweise in Bezug auf den Revolverkopf nach vorne weisend zur Bearbeitung eines Werkstücks an der Hauptspindel oder nach hinten weisend zur Bearbeitung eines Werkstücks an der Gegenspindel.

Erfindungsgemäße Werkzeughalter eignen sich besonders für Drehmaschinen mit einem oder mehreren Revolverköpfen mit einer Revolverachse, die sich parallel zur Z-Achse der Drehmaschine erstreckt, mit Aufspannflächen, die parallel zur Revolverachse angeordnet sind, und mit Einstecklöchern, deren geometrische Achsen die Revolverachse schneiden. Bei einer solchen Verwendung kann jeder Werkzeughalter zweckmäßigerweise zum Einspannen eines Werkzeugs ausgerüstet sein, das je nach Anordnung des Werkzeughalters über eine oder die andere von zwei zur Revolverachse normalen Stirnflächen des Werkzeughalters hinausragt und somit wahlweise in zwei entgegengesetzten Richtungen arbeiten, beispielsweise bohren, kann. Dies ist von besonderem Vorteil bei Drehmaschinen, auf denen Werkstücke erst an einer Hauptspindel bearbeitet und dann an einer Gegenspindel fertigbearbeitet werden.

Bei einer zweckmäßigen Weiterbildung der Erfindung weist das Gehäuse des Werkzeughalters zwei Kühlmittelkanäle auf, die in bezug auf den Schaft umd 180° gegeneinander versetzt von der Anlagefläche ausgehen, zu einer Kühlmitteldüse führen und so angeordnet sind, das in jeder der beiden gegeneinander verdrehten Stellungen des Werkzeughalters einer der beiden Kühlmittelkanäle an eine Bohrung im Revolverkopf angeschlossen ist, durch die ein Kühlmittel zuführbar ist. Als Alternative zu dieser Gestaltung kann in die Anlagefläche des Werkzeughaltergehäuses eine zum Schaft konzentrische Ringnut eingearbeitet sein, die bei jeder möglichen Anordnung des Werkzeughalters in bezug auf den Revolverkopf Verbindung mit dessen Kühlmittelbohrung hat und ihrerseits durch einen Kanal im Gehäuse des Werkzeughalters mit der Kühlmitteldüse verbunden ist.

Ein Ausführungsbeispiel der Erfindung wird im folgenden anhand schematischer Zeichnungen mit weiteren Einzelheiten erläutert. Es zeigen:
- Fig. 1: einen Werkzeugrevolver für einen Drehautomaten, teilweise in einem axialen Schnitt,
- Fig. 2: den Schnitt II-II in Fig. 1,
- Fig. 3: den Schnitt III-III in Fig. 1,
- Fig. 4: die Ansicht in Richtung des Pfeils IV in Fig. 1,
- Fig. 5: den Schnitt V-V in Fig. 4 und
- Fig. 6: einen vergrößerten Ausschnitt aus Fig. 1.

Der dargestellte Werkzeugrevolver hat einen Revolverkörper 10, der an einem Schlitten 12 einer üblichen Kreuzschlittenanordnung eines Drehautomaten befestigt ist; dies bedeutet, daß der Revolverkörper 10 mit dem Schlitten 12 längs zweier zueinander rechtwinkliger Achsen X und Z verstellbar ist, von denen die Achse Z die Achsrichtung der Hauptspindel des Drehautomaten darstellt. Am Revolverkörper 10 ist ein Werkzeugträger in Gestalt eines Revolverkopfes 14 gelagert, der eine Innenverzahnung 15 aufweist und in üblicher Weise mittels eines in diese eingreifenden, nicht dargestellten Ritzels um eine Revolverachse 16 drehbar ist, wenn er eine Schaltstellung einnimmt. Aus der Schaltstellung ist der Revolverkopf 14 in ebenfalls üblicher Weise, z.B. hydraulisch, längs der Revolverachse 16 in die abgebildete Haltestellung bewegbar, in der eine an ihm ausgebildete Planverzahnung 17 in eine komplementäre Planverzahnung des Revolverkörpers 10 eingreift.

Der Revolverkopf 14 hat eine freie Stirnfläche 18 und eine dem Revolverkörper 10 zugewandte ringförmige Stirnfläche 20, die radial nach außen konvergierende, ebene Stirnflächenränder 22 und 24 aufweisen. Der Umfang des Revolverkopfes 14 ist polygonal aus mehreren, im dargestellten Beispiel zwölf, ebenen Aufspannflächen 26 zusammengesetzt. Im dargestellten Beispiel erstreckt sich die Revolverachse 16 parallel zur Z-Achse der Drehmaschine, wie dies bei Trommelrevolvern üblich ist; die Aufspannflächen 26 sind jedoch parallel zur Revolverachse 16 angeordnet, wie dies bei Sternrevolvern üblich ist.

Der erfindungsgemäße Werkzeugrevolver kann auch in der Art eines Kronenrevolvers ausgestaltet sein; dabei erstreckt sich die Revolverachse 16 unter einem Winkel von beispielsweise 30° zur Z-Achse, und jede der Aufspannflächen ist unter einem zu diesem Winkel komplementären Winkel gegen die Revolverachse 16 geneigt angeordnet.

In der Mitte jeder Aufspannfläche 26 ist ein zylindrisches Einsteckloch 28 in den Revolverkopf 14 eingearbeitet. Im dargestellten Beispiel schneiden die geometrischen Achsen 30 sämtlicher Einstecklöcher 28 die Revolverachse 16 unter einem rechten Winkel. In einem geringen Abstand parallel zu jedem Einsteckloch 28 ist im Revolverkopf 14 eine Bohrung 32 angeordnet, die an eine nicht dargestellte Kühlmittelpumpe angeschlossen ist. Diese fördert beispielsweise eine Schneidemulsion üblicher Zusammensetzung.

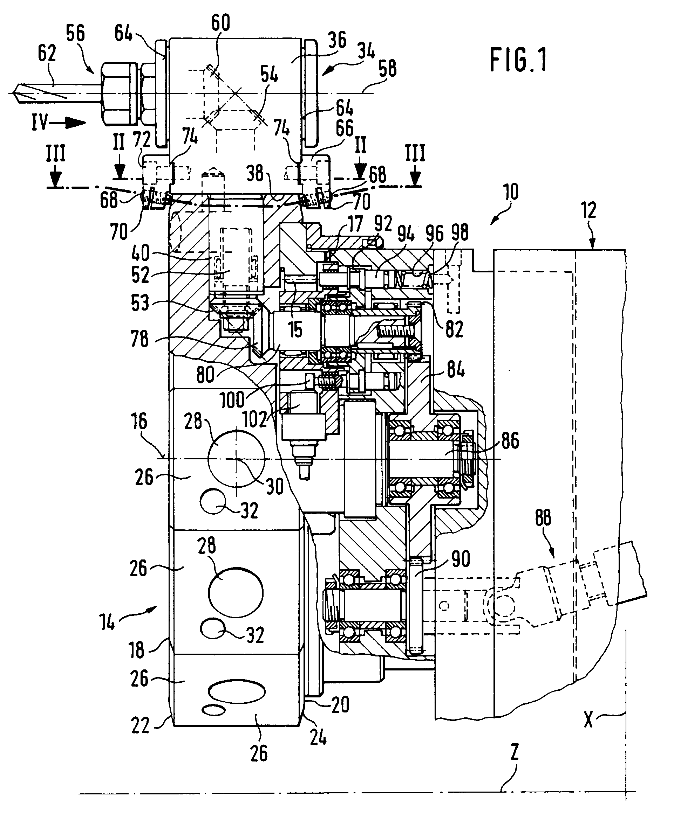

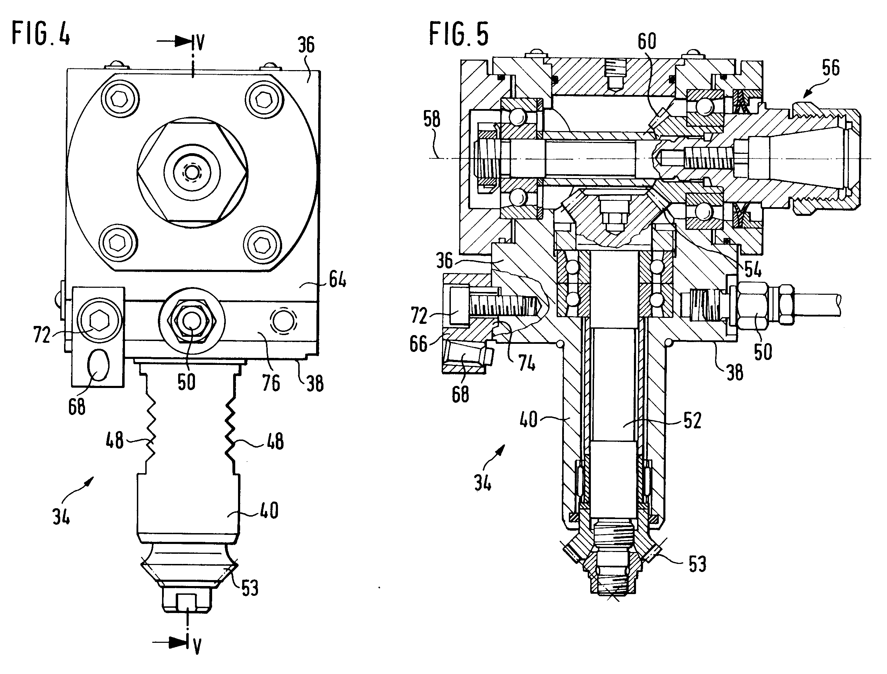

An den Aufspannflächen 26 des Revolverkopfes 14 lassen sich bis zu zwölf Werkzeughalter befestigen; in Fig. 1 bis 6 ist ein Beispiel eines solchen Werkzeughalters 34 dargestellt.

Der Werkzeughalter 34 hat ein im wesentlichen quaderförmiges Gehäuse 36 mit einer ebenen Anlagefläche 38, von der sich mittig und rechtwinklig ein Schaft 40 wegerstreckt. Der Schaft 40 paßt in jedes der Einstecklöcher 28 des Revolverkopfes 14; im montierten Zustand des Werkzeughalters 34 liegt dessen Anlagefläche 38 an der Aufspannfläche 26 rings um das betreffende Einsteckloch 28 vollflächig an. Zum Befestigen des Schafts 40 ist im Revolverkopf 14 tangential zu jedem Einsteckloch 28 eine Befestigungsbohrung 42 angeordnet; in dieser ist mittels einer Spannschraube 44 ein keilförmiger Bolzen 46 befestigt, der verzahnt ist und in eine zahnstangenartige Verzahnung 48 des betreffenden Schafts 40 eingreift.

Soweit bisher beschrieben, sind der Werkzeughalter 34 und seine Befestigung am Revolverkopf 14 bekannt; sie entsprechen der Norm DIN 69 880.

Erfindungsgemäß weist der Schaft 40 des dargestellten Werkzeughalters 34 diametral gegenüber der Verzahnung 48, also gegenüber dieser um 180° versetzt, eine weitere, vollständig gleiche Verzahnung 48 auf. Infolgedessen läßt sich der Werkzeughalter 34 wahlweise in der aus Fig. 1 ersichtlichen Stellung oder in einer bezüglich der Achse 30 des gewählten Einstecklochs 28 um 180° gedrehten Stellung am Revolverkopf 14 befestigen.

Von der Anlagefläche 38 des Gehäuses 36 gehen zwei Kühlmittelkanäle 49 aus, die in bezug auf den Schaft 40 einander diametral gegenüberliegen. Die Kühlmittelkanäle 49 sind so angeordnet, daß in jeder der beiden möglichen Stellungen des Werkzeughalters 34 einer dieser Kühlmittelkanäle 49 an die Bohrung 32 angeschlossen ist, die in der zugehörigen Aufspannfläche 26 mündet. An die beiden Kühlmittelkanäle 49 ist eine Kühlmitteldüse 50 angeschlossen, die in das Gehäuse 36 eingeschraubt ist. Die Kühlmitteldüse 50 kann somit in jeder der beiden Stellungen des Werkzeughalters 34 über die zugehörige Bohrung 32 mit einem Kühlmittel versorgt werden. In der Bohrung 32 kann eine Paßhülse 51 stecken, die je nach Anordnung des Werkzeughalters 34 in den einen oder anderen seiner beiden Kühlmittelkanäle 49 eingreift und dadurch den Werkzeughalter 34 gegen Verdrehen sichert.

Im Gehäuse 36 und im Schaft 40 des Werkzeughalters 34 ist gleichachsig mit dem Schaft 40 eine Spindel 52 gelagert, die an ihren beiden Enden je ein Zahnrad 53 bzw. 54 trägt; im dargestellten Beispiel sind beide Kegelräder. Quer zur Spindel 52 ist im Gehäuse 36 eine Einspannvorrichtung 56 gelagert; deren Achse 58 die Achse des Schafts 40 unter einem rechten Winkel schneidet. An der Einspannvorrichtung 56 ist ein Kegelrad 60 ausgebildet, das mit dem Kegelrad 54 kämmt. In der Einspannvorrichtung 56 ist ein Werkzeug 62, im dargestellten Beispiel ein Bohrer, gespannt.

Die Befestigung des Schafts 40 mittels des Bolzens 46 genügt zwar, um die Anlagefläche 38 des Werkzeughalters 34 an der gewählten Aufspannfläche 26 des Revolverkopfes 14 fest anliegend zu halten; für eine präzise Ausrichtung des Werkzeugs 62 besteht damit jedoch noch keine ausreichende Gewähr. Nach dem erwähnten Normblatt DIN 69880 soll deshalb in der Bohrung 32 die erwähnte Paßhülse 51 stecken, die mit enger Fassung in eine entsprechende Bohrung im Gehäuse 36 des Werkzeughalters 34 eingreift und diesen in einer vorbestimmten Winkelstellung in bezug auf die Achse 30 festlegen soll. Die Paßhülse 51 ist jedoch gegen Querkräfte und Biegemomente nicht besonders widerstandsfähig. Starke Belastungen des Werkzeughalters 34 durch Zerspanungskräfte können deshalb dazu führen, daß das Werkzeug 62 nicht genau in der gewünschten Richtung - in der Regel parallel zur Z-Achse - stehenbleibt. Deshalb wird die Paßhülse 51 durch die folgenden Maßnahmen ergänzt, die es ermöglichen, den Werkzeughalter 34, und somit das Werkzeug 62, mit höchster Genauigkeit einzustellen und sicher festzuhalten.

Das Gehäuse 36 des Werkzeughalters 34 hat an seinen beiden Stirnseiten 64, die mit je einer der Stirnflächen 18 und 20 des Revolverkopfes 14 mindestens annähernd in einer gemeinsamen Ebene liegen, je einen seitlichen Ansatz 66, von dem aus ein Einstellglied 68 gegen den benachbarten Stirnflächenrand 22 bzw. 24 des Revolverkopfes 14 spannbar ist. Die Einstellglieder 68 sind im dargestellten Beispiel Schrauben, die rechtwinklig zum zugehörigen Stirnflächenrand 22 bzw. 24 in den betreffenden Ansatz 66 eingeschraubt sind. Jeder Ansatz 66 hat einen federnden Vorsprung 70, durch den das zugehörige Einstellglied 68 hindurchgeschraubt ist, und der durch eine Madenschraube 71 unter axialer Spannung gehalten ist, so daß das Einstellglied 68 gegen unbeabsichtigtes Drehen gesichert ist.

Die Ansätze 66 können einstückig am Gehäuse 36 ausgebildet sein; im dargestellten Beispiel handelt es sich jedoch um getrennte Bauteile, die mit je einer Schraube 72 am Gehäuse 36 befestigt sind und je eine Fußrippe 74 aufweisen, die in eine komplementäre Nut 76 an der betreffenden Stirnseite 64 des Gehäuses 36 eingreift, wodurch der Ansatz 66 daran gehindert ist, sich um die Schraube 72 zu drehen.

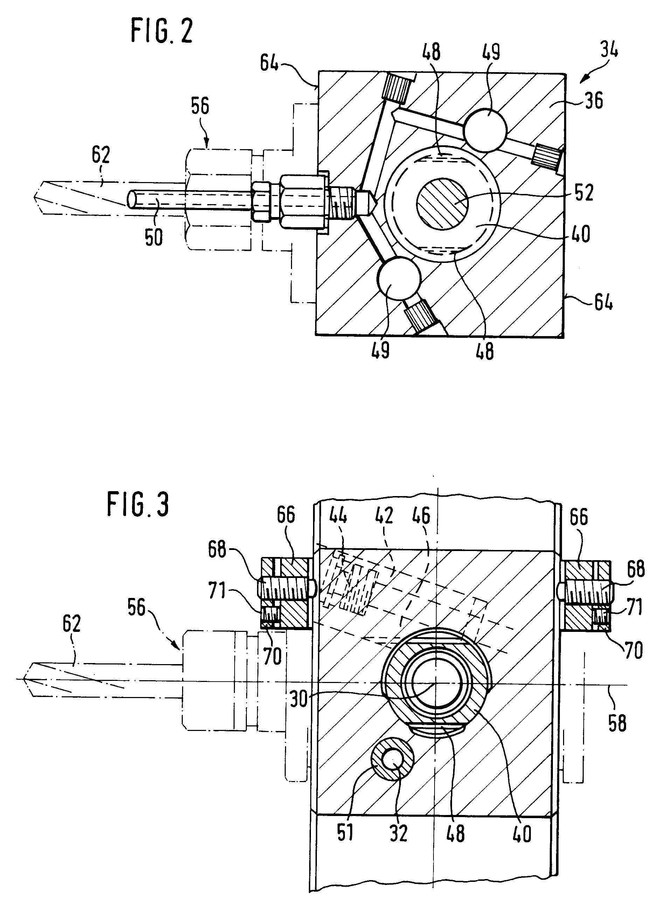

Die beiden seitlichen Ansätze 66 sind gemäß Fig. 3 auf einer und derselben Seite der gemeinsamen Ebene der beiden Achsen 30 und 58 angeordnet. Deshalb bewirkt ein Spannen des in Fig. 1 und 3 rechten Einstellgliedes 68 eine Schwenkung des Werkzeughalters 34 im Uhrzeigersinn, während ein Spannen des in Fig. 3 linken Einstellgliedes 68 eine Schwenkung entgegen dem Uhrzeigersinn bewirkt. Mit den Einstellgliedern 68 beider seitlichen Ansätze 66 läßt sich somit der Werkzeughalter 34 so einstellen, daß das Werkzeug 62 genau in der gewünschten Weise ausgerichtet ist, insbes. parallel zur Z-Achse.

Die Genauigkeit dieser Ausrichtung geht nicht verloren, wenn der Werkzeughalter 34 vom Revolverkopf 14 getrennt und später wieder an derselben oder einer anderen Aufspannfläche 26 des Revolverkopfes 14 befestigt wird. An den Einstellgliedern 68 braucht dabei nichts geändert zu werden, da sie mit je einem der schrägen Stirnflächenränder 22 und 24 zusammenwirken und deshalb das Abnehmen und Wiederanbringen des Werkzeughalters 34 nicht behindern. Wenn die Einstellglieder 68 vorhanden und eingestellt sind, kann die Paßhülse 51 mit verhältnismäßig loser Passung in den einen oder anderen Kühlmittelkanal 49 eingreifen, da sie nur noch zum Einleiten von Kühlflüssigkeit in den Werkzeughalter 34 dient.

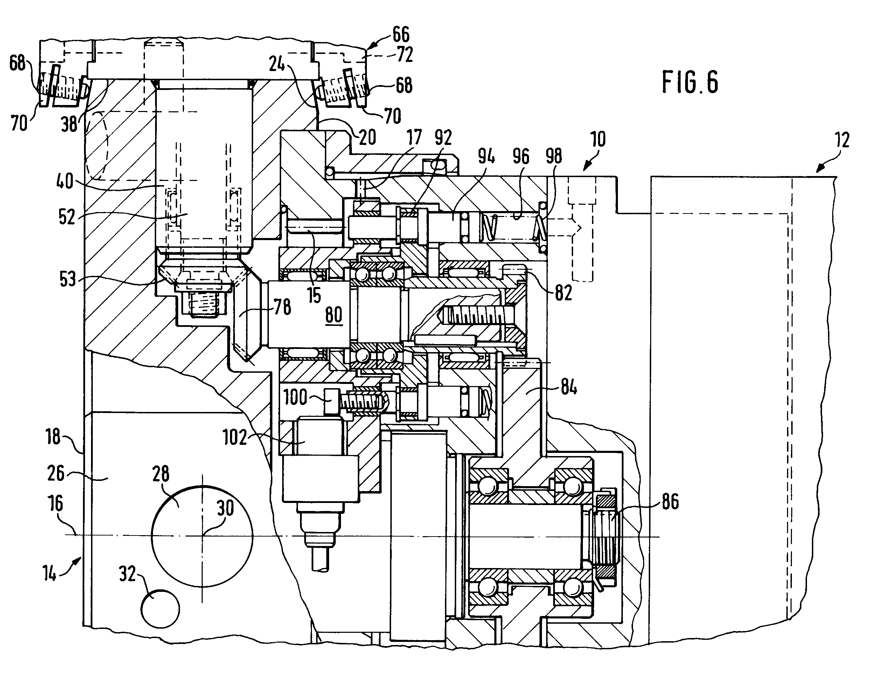

Das in bezug auf den Revolverkopf 14 radial innere Zahnrad 53 der Spindel 52 kämmt in einer Betriebsstellung gemäß Fig. 1 und 6 mit einem ebenfalls als Kegelrad ausgebildeten Zahnrad 78 an einem Ende einer Antriebswelle 80, die im Revolverkörper 10 parallel zur Revolverachse 16 gelagert und über ein an ihrem anderen Ende ausgebildetes, schrägverzahntes Zahnrad 82 von einem ebenfalls schrägverzahnten zentralen Zahnrad 84 antreibbar ist. Das zentrale Zahnrad 84 ist auf einem Wellenzapfen 86 des Revolverkopfes 14 gelagert und von einem nicht dargestellten Antrieb über eine Gelenkwelle 88 und ein im Revolverkörper 10 gelagertes Ritzel 90 antreibbar.

Die Antriebswelle 80 ist zusammen mit einem Ring 92 im Revolverkörper 10 axial verschiebbar. Am Ring 92 sind, einander in bezug auf die Antriebswelle 80 diametral gegenüber, zwei Kolben 94 befestigt, die in je einer Zylinderbohrung 96 arbeiten. Die beiden Zylinderbohrungen 96 enthalten je eine Feder 98, die bestrebt ist, die Kolben 94, und somit auch die Antriebswelle 80, in ihrer abgebildeten Stellung zu halten, in der die beiden Zahnräder 53 und 78 miteinander in Eingriff stehen, die Spindel 52 also mit der Antriebswelle 80 gekuppelt ist. In dieser Stellung wird die Antriebswelle 80 im Betrieb dadurch festgehalten, daß in die beiden Zylinderbohrungen 96 ein Fluid unter Druck eingeleitet wird.

An einem der beiden Kolben 94 ist eine Einstellschraube 100 befestigt, die einem Sensor 102 zugeordnet ist. Erst wenn die Antriebswelle 80 ihre eingerückte Stellung einnimmt, gibt der Sensor 102 ein Signal ab, das über ein nicht dargestelltes Ventil das Fluid unter Druck in die beiden Zylinderbohrungen 96 einströmen läßt. Das Einrücken selbst wird also nur von den verhältnismäßig schwachen Federn 98 bewirkt.

## Patentansprüche

1. Revolverkopf (14) mit auswechselbaren Werkzeughaltern (34) an einer mit Haupt- und Gegenspindel ausgestatteten Drehmaschine, mit
- Einstecklöchern (28), die von je einer ebenen Aufspannfläche (26) des Revolverkopfes (14) ausgehen, und
- einem im Revolverkopf (14) geführten, verzahnten Bolzen (46) für jedes Einsteckloch (28), wobei
- jeder Werkzeughalter (34) ein Gehäuse (36) aufweist, das eine Anlagefläche (38) zum Anlegen an einer der Aufspannflächen (26) des Revolverkopfes (14) hat, und
- jeder Werkzeughalter (34) ferner einen Schaft (40) aufweist, der von der Anlagefläche (38) ausgeht, zum Einstecken in das Einsteckloch (28) des Revolverkopfes (14) ausgebildet und zahnstangenartig verzahnt ist, so daß er sich mittels des entsprechend verzahnten, im Revolverkopf (14) geführten Bolzens (46) axial festspannen läßt,
dadurch **gekennzeichnet**, daß
- die Aufspannflächen (26) zwischen einer vorderen und einer hinteren Stirnfläche (18, 20) des Revolverkopfes (14) an dessen Umfang angeordnet sind,
- der Schaft (40) jedes der Werkzeughalter (34) zwei einander diametral gegenüberliegende gleiche Verzahnungen (48) aufweist, mit denen die Werkzeughalter (34) in den Einstecklöchern (28) in zwei um 180° gegeneinander verdrehten Stellungen festspannbar sind, nämlich
- wahlweise in Bezug auf den Revolverkopf (14) nach vorne weisend zur Bearbeitung eines Werkstücks an der Hauptspindel oder nach hinten weisend zur Bearbeitung eines Werkstücks an der Gegenspindel.

2. Werkzeughalter nach Anspruch 1,
dadurch **gekennzeichnet,** daß das Gehäuse (36) des Werkzeughalters (34) zwei Kühlmittelkanäle (49) aufweist, die in bezug auf den Schaft (40) um 180° gegeneinander versetzt von der Anlagefläche (38) ausgehen, zu einer Kühlmitteldüse (50) führen und so angeordnet sind, daß in jeder der beiden gegeneinander verdrehten Stellungen des Werkzeughalters (34) einer der beiden Kühlmittelkanäle (49) an eine Bohrung (32) im Revolverkopf (14) angeschlossen ist, durch die ein Kühlmittel zuführbar ist.

## Claims

1. Turret (14) with exchangeable tool holders (34) on a lathe equipped with main and counter spindles, with
- insertion holes (28) which each extend from one plane clamping surface (26) of the turret (14) and
- for each insertion hole (28), a toothed bolt (46) carried in the turret (14), where
- each tool holder (34) has a casing (36) which has engagement surface (38) for resting against one of the clamping surfaces (26) of the turret (14) and
- each tool holder (34) has, in addition, a shaft (40) which projects from the engagement surface (38), is formed so as to be inserted into the insertion hole (28) of the turret (14) and is toothed in the manner of a rack, so that it can be clamped axially by means of the correspondingly toothed bolt (46) carried in the turret (14),
**characterised** in that
- the clamping surfaces (26) are arranged between one forward and one rear end face (18, 20) of the turret (14), on its periphery,
- the shaft (40) of each of the tool holders (34) has two like sets of toothing (48), diametrically opposite each other, with which the tool holders (34) can be clamped in the insertion holes (28) in two positions rotated by 180° with respect to each other, namely
- with respect to the turret (14), pointing forward for machining a workpiece on the main spindle or, alternatively, pointing backwards for machining a workpiece on the counter spindle.

2. Tool holder according to claim 1,
**characterised** in that the casing (36) of the tool holder (34) has two coolant channels (49) which, displaced by 180° from each other with respect to the shaft (40), proceed from engagement surface (38), lead to a coolant nozzle (50) and are so arranged that in each of the two positions of the tool holder (34), which are rotated with respect to each other, one of the two coolant channels (49) is connected to a boring (32) in the turret (14), through which a coolant can be supplied.

## Revendications

1. Tête revolver (14) avec des porte-outils interchangeables (34) sur une machine à tourner équipée d'une broche principale et d'une contre-broche, avec
- des trous d'enfichage (28), qui partent de chacune des surfaces planes de montage (26) de la tête revolver (14), et
- une tige dentée (46) guidée dans la tête revolver (14), pour chaque trou d'enfichage (28), et
- chaque porte-outils (34) comporte un boîtier (36), qui a une surface d'appui (38) pour l'appui sur une des surfaces de montage (26) de la tête revolver (14), et
- chaque porte-outils (34) comprend de plus un axe (40), qui part de la surface d'appui (38), réalisé pour s'enficher dans le trou d'enfichage (28) de la tête revolver (14) et qui est denté à la manière d'une tige à crémaillère, de telle manière qu'on peut le serrer axialement fermement au moyen de la tige (46) dentée en correspondance, guidée dans la tête revolver (14),
caractérisée en ce que
- les surfaces de montage (26) sont réalisées entre une face d'extrémité avant et une face d'extrémité arrière (18, 20) de la tête revolver (14) et sont agencées sur la périphérie de celui-ci,
- l'axe (40) de chacun des porte-outils (34) comporte deux dentures (48) égales opposées diamétralement l'une par rapport à l'autre, avec lesquelles les porte-outils (34) peuvent être serrés dans les trous d'enfichage (28) dans deux positions tournées l'une par rapport à l'autre de 180°, à savoir
- au choix par rapport à la tête revolver (14) en direction de l'avant pour l'usinage d'un article sur la broche principale ou en direction de l'arrière pour l'usinage d'un article sur la contre-broche.

2. Porte-outils selon revendication 1, caractérisé en ce que le boîtier (36) du porte-outils (34) comporte deux canaux de réfrigérant (49), qui partent de la surface d'appui (38) et sont décalés de 180° l'un par rapport à l'autre vis-à-vis de l'axe (40), ces canaux conduisant à une buse de réfrigérant (50) et sont agencés de telle manière que dans chacune des deux positions du porte-outils (34) tournées l'une par rapport à l'autre un des deux canaux de réfrigérant (49) est raccordé à un perçage (32) dans la tête revolver (14), à travers lequel un réfrigérant peut être alimenté.
